# EUROPÄISCHE PATENTANMELDUNG

(11) **EP 4 817 387 A1**
(43) Veröffentlichungstag der Anmeldung: **07.10.2026**
(21) Anmeldenummer: 26158846.1
(22) Anmeldetag: 16.02.2026
(51) Int. Cl.: A01C 15/00, B60P 1/36

(54) **BELADEVORRICHTUNG ZUM BELADEN VON LANDWIRTSCHAFTLICHEN VERTEILMASCHINEN MIT PULVER- ODER PARTIKELFÖRMIGEM VERTEILGUT**

(30) Priorität: 02.04.2025 DE 202025101800 U
(71) Anmelder: RAUCH Landmaschinenfabrik GmbH, 77836 Rheinmünster (DE)
(72) Erfinder: Klein, Frederic, 67000 Strasbourg (FR); Stöcklin, Volker, 77975 Ringsheim (DE)
(74) Vertreter: Lichti - Patentanwälte Partnerschaft mbB

(57) **Zusammenfassung**

Beladevorrichtung zum Beladen einer landwirtschaftlichen Verteilmaschine (1) mit pulver- und/oder partikelförmgem Verteilgut, umfassend:
- wenigstens einen mobilen Vorratsbehälter (2) zur Aufnahme des Verteilgutes,
- wenigstens eine dem mobilen Vorratsbehälter (2) zugeordnete Fördereinrichtung (10), welche zur Förderung von in dem mobilen Vorratsbehälter (2) aufgenommenem Verteilgut aus dem Vorratsbehälter (2) an einen Beladeort ausgebildet ist, und
- eine der Fördereinrichtung (10) zugeordnete Steuereinrichtung, welche zur fernbedienbaren und/oder automatisierten Steuerung der Fördereinrichtung (10) ausgebildet ist,
**wobei** die Fördereinrichtung (10) mit der ihr zugeordneten Steuereinrichtung von einer separaten Fördereinheit gebildet ist, welche an dem mobilen Vorratsbehälter (2) stromab eines Auslasses (4) desselben lösbar montierbar ist.

## Beschreibung

Die Erfindung betrifft eine Beladevorrichtung zum Beladen einer landwirtschaftlichen Verteilmaschine mit pulver- und/oder partikelförmigem Verteilgut, umfassend:
- wenigstens einen mobilen Vorratsbehälter zur Aufnahme des Verteilgutes,
- wenigstens eine dem mobilen Vorratsbehälter zugeordnete Fördereinrichtung, welche zur Förderung von in dem Vorratsbehälter aufgenommenem Verteilgut aus dem Vorratsbehälter an einen Beladeort ausgebildet ist, und
- eine der Fördereinrichtung zugeordnete Steuereinrichtung, welche zur fernbedienbaren und/oder automatisierten Steuerung der Fördereinrichtung ausgebildet ist.

Landwirtschaftliche Verteilmaschinen sind einerseits in Form von sogenannten Zentrifugal- oder Scheibenstreuern zum Ausbringen von pulver- oder partikelförmigem Verteilgut, wie insbesondere Dünger oder Saatgut, in vielfältiger Ausgestaltung bekannt, so beispielsweise als gezogener, üblicherweise achsgestützter Selbstläufer oder von dem Dreipunkt-Kraftheber einer Zugmaschine, wie eines Traktors, aufgenommener Bauart. Derartige Verteilmaschinen umfassen einen das Verteilgut aufnehmenden Behälter, an dessen Boden üblicherweise eine oder zwei Auslauföffnungen angeordnet sind, wobei der jeweiligen Auslauföffnung ein Dosierorgan nachgeordnet ist, um das auszubringende Verteilgut in der gewünschten Menge - oder genauer: mit dem gewünschten Massenstrom - dem Behälter zu entnehmen. Das Dosierorgan weist insbesondere bei Verteilmaschinen in Form von Zentrifugal- bzw. Scheibenstreuern üblicherweise einen Dosierschieber auf, welcher mittels eines geeigneten Stellorgans auf- und zusteuerbar, um je nach gewünschter Verteilungsbreite des Verteilgutes auf dem Boden, je nach Fahrgeschwindigkeit und je nach den physikalischen Eigenschaften des Verteilgutes, wie beispielsweise dessen Rieselfähigkeit, den gewünschten Massenstrom einstellen zu können. Alternativ kann das Dosierorgan zu demselben Zweck z.B. auch eine steuerbar drehangetriebenes Nocken- oder Zellenradwalze umfassen. Stromab des Dosierorgans befindet sich ein oder befinden sich mehrere Verteilorgan(e), wie beispielsweise in Form von mit Wurfschaufeln bestückten Verteilerscheiben, mittels welchen das pulver- oder partikelförmige Verteilgut über die gewünschte Arbeitsbreite verteilt wird. Eine derartige landwirtschaftliche Verteilmaschine in Form eines Scheibenstreuers ist beispielsweise aus der DE 10 2007 053 550 A1 bekannt.

Zusätzlich zu den vorbeschriebenen Scheibenstreuern sind für landwirtschaftliche Zwecke ferner pneumatische Verteilmaschinen bekannt, wie sie beispielsweise in Form eines pneumatischen Düngerstreuers der DE 10 2004 030 240 A1 zu entnehmen sind. Pneumatische Verteilmaschinen weisen in der Regel eine Mehrzahl an Dosierorganen auf, welche jeweils eine drehangetriebene Dosierwalze umfassen, an deren Dosiergehäuse sich auslassseitig wiederum mehrere, mittels Gebläse druckbeaufschlagte Übergabekammern anschließen, von welchen einzeln oder gruppenweise mehrere Förderleitungen abgehen, welche in je einem Verteilorgan münden. Letztere sind üblicherweise von Prallorganen gebildet, welche das hierauf auftreffende Verteilgut etwa fächerförmig auf dem Boden verteilen. Eine Teilbreitenschaltung ist dadurch gewährleistet, dass jedem Dosierorgan ein eigener, unabhängig voneinander drehzahlgesteuerter Motor zum Antrieb seiner jeweiligen Dosierwalze zugeordnet ist, so dass nebeneinander angeordnete Verteilorgane, welche von den jeweiligen Gruppen an Förderleitungen mit Verteilgut versorgt sind, die von einem jeweiligen Dosierorgan ausgehen, gruppenweise zu- bzw. abgeschaltet werden können.

Darüber hinaus kommen gattungsgemäße Verteilmaschinen in Form von landwirtschaftlichen Sä- oder Drillmaschinen zum Einsatz. Auch hier wird das in dem Behälter auf Vorrat gehaltene Verteilgut mittels eines üblicherweise unterhalb einer Auslauföffnung des Behälters angeordneten Dosierorgan dosiert und wird der dosierte Massenstrom an Verteilgut an eine dem Dosierorgan nachgeordnete, z.B. mittels eines Gebläses mit Druckluft beaufschlagte Förderleitung übergeben, welche den in den Druckluftstrom eindispergierten, dosierten Verteilgutstrom einem Verteilerkopf aufgibt. Der Verteilerkopf umfasst eine Mehrzahl an Abgängen, an welche sich je eine Verteilerleitung anschließt, welche dazu dient, den Verteilgutstrom in der Anzahl an Verteilerleitungen entsprechenden Teilströmen je einem Verteilorgan, z.B. in Form von Säscharen (sofern es sich bei dem Verteilgut insbesondere um Saatgut handelt), Prallorganen (sofern es sich bei dem Verteilgut insbesondere um Dünger handelt) oder dergleichen, zuzuführen, welche mit unterschiedlichem Seitenabstand von der Verteilmaschine an Auslegern derselben angeordnet sind. Derartige Verteilmaschinen sind beispielsweise aus den DE 44 34 963 A1 oder DE 197 47 029 A1 bekannt. Alternativ zu einem solchen Verteilerkopf können den jeweiligen Dosierorganen auch mehrere Übergabekammern nachgeordnet sein, welche zum Übergeben eines dosierten Verteilgutstromes an je eine Verteilerleitung dient, welche ein jeweiliges Verteilorgan direkt, d.h. ohne Zwischenschaltung eines Verteilerkopfes, versorgt. Eine derartige pneumatische Verteilmaschine ist beispielsweise aus der DE 20 2022 100 740 A1 bekannt.

Moderne landwirtschaftliche Verteilmaschinen, welche - wie oben beschrieben - in den meisten Fällen in Form von Selbstfahrern oder Anbaugeräten ausgestaltet sind, sind überdies häufig mit satellitengestützten Positionserfassungssystemen und einer elektronischen Steuer- und/oder Regeleinrichtung ausgestattet, welche beispielsweise zum Auslesen einer elektronischen Feldkarte in der Lage ist, auf welcher der Verteilgutbedarf des Feldes gespeichert ist. Auf diese Weise sind solche Verteilmaschinen in zunehmendem Maße zum autonomen oder zumindest teilautonomen Betrieb geeignet, um in automatisierter Weise an jedem Ort innerhalb eines zu bestellenden Feldes die jeweils vorgesehene Menge an Verteilgut auszubringen, ohne dass ein menschlicher Eingriff vor Ort erforderlich ist. Darüber hinaus bereits weitestgehend autonom betriebene Streuroboter oder -drohnen zum Ausbringen von landwirtschaftlichen Verteilgütern bekannt (vgl. z.B. die DE 20 2023 106 596 A1 oder DE 20 2023 106 598 A1), deren Funktionsteile, wie Behälter, Dosierorgane, Verteilorgane etc., in ähnlicher Weise ausgestaltet sind wie bei herkömmlichen landwirtschaftlichen Verteilmaschinen.

Als in logistischer Hinsicht aufwändig erweisen sich insbesondere die notwendigen Beladevorgänge der landwirtschaftlichen Verteilmaschine, soweit deren Behälter zur Aufnahme der gesamten, jeweils benötigten Menge an Verteilgut nicht ausreicht. Um eine Mehrzahl an Überführungen der landwirtschaftlichen Verteilmaschine zwischen ihrem Betriebsort auf einem Feld und dem in der Regel anderswo befindlichen landwirtschaftlichen Betrieb, wo die Verteilmaschine mit neuem Verteilgut beladen werden kann, zu vermeiden, kommen in der Praxis beispielsweise mobile Vorratsbehälter zum Einsatz, welche z.B. auf das Chassis eines Fahrzeugs, wie ein Lkw-Anhänger, aufgesetzt sind und ein deutlich größeres Fassungsvermögen besitzen als der Behälter der Verteilmaschine. Einem solchen Vorratsbehälter kann dann z.B. im landwirtschaftlichen Betrieb die erforderliche Gesamtmenge an Verteilgut aufgegeben werden, wonach er gemeinsam mit der landwirtschaftlichen Verteilmaschine an deren Bestimmungsort auf einem Feld überführt wird, wo der Landwirt dank des vor Ort abgestellten Vorratsbehälters den Behälter der Verteilmaschine erforderlichenfalls ein- oder mehrfach nachzufüllen vermag. Indes stellt auch dies sowohl in handhabungstechnischer als auch in zeitlicher Hinsicht einen nicht unerheblichen Aufwand dar und erfordert die Anwesenheit zumindest einer Bedienperson vor Ort, so dass ein autonomer Betrieb der landwirtschaftlichen Verteilmaschine nicht möglich ist.

Moderne Beladevorrichtungen zum Beladen landwirtschaftlicher Verteilmaschinen an ihrem Betriebsort sind daher üblicherweise nach Art eines sogenannten Überladewagens ausgestaltet und umfassen neben dem achsgestützten, mobilen Vorratsbehälter zur Aufnahme einer gegenüber dem Fassungsvermögen des Behälters der Verteilmaschine großen Menge an Verteilgut eine dem Vorratsbehälter zugeordnete Fördereinrichtung, welche zur Förderung des in dem Vorratsbehälter aufgenommenen Verteilgutes aus dem Vorratsbehälter an einen Beladeort dient, wobei die Fördereinrichtung in der Regel in Form eines von einem Auslass des Vorratsbehälters schräg nach oben verschwenkbaren Förderbandes ausgestaltet ist und sich der Beladeort aus der Position des freien (oberen) Endes des Förderbandes ergibt, wo der Behälter der landwirtschaftlichen Verteilmaschine beladen werden kann, wenn er an diesem Beladeort unterhalb des freien Endes des Förderbandes positioniert wird. Der Fördereinrichtung ist üblicherweise eine Steuereinrichtung zugeordnet, welche in körperlicher Hinsicht an der Fördereinrichtung selbst oder an dem mobilen Vorratsbehälter bzw. dessen achsgestütztes Chassis angeordnet sein kann und zur fernbedienbaren und/oder automatisierten Steuerung der Fördereinrichtung dient.

Die US 2010/0290867 A1 beschreibt eine nach Art eines Überladewagens ausgebildete Beladevorrichtung für pulver- bzw. partikelförmige Schüttgüter, welche einen achsgestützten mobilen Vorratsbehälter zur Aufnahme des Schüttgutes, eine dem mobilen Vorratsbehälter zugeordnete Fördereinrichtung zur Förderung von in dem mobilen Vorratsbehälter aufgenommenem Schüttgut aus dem Vorratsbehälter in ein Fahrzeug, wie einen Lkw, und eine Steuereinrichtung umfasst, welche zur Steuerung der Fördereinrichtung ausgebildet ist. Die Fördereinrichtung ist nach Art eines Förderbandes ausgestaltet und mittels einer Schwenkstruktur an dem Vorratsbehälter befestigt.

Indes erweisen sich die bekannten Überladefahrzeuge mit dem Vorratsbehälter, der Fördereinrichtung und der entsprechenden Steuereinrichtung als relativ teuer, wobei ihr Einsatz im Wesentlichen auf die Beladung landwirtschaftlicher Verteilmaschinen an deren Einsatzort beschränkt ist, so dass sich ihre Anschaffung und/oder Verwendung für den Landwirt häufig als nicht wirtschaftlich erweist. Zudem weisen die Vorratsbehälter von bekannten Überladefahrzeugen häufig ein sehr großes Fassungsvermögen auf, was insbesondere im Falle von zumindest teilweise autonom arbeitenden landwirtschaftlichen Verteilmaschinen, z.B. in Form von Streurobotern oder -drohnen, deren Behälter gegenüber jenem von Anbaugeräten oder gar Selbstfahrern in der Regel ein geringeres Fassungsvermögen besitzt und welche in der Regel zur Versorgung von kleineren, gegebenenfalls relativ schwer zugänglichen und/oder schwer bewirtschaftbaren Agrarflächen dienen, eine Überdimensionierung darstellt und erst recht keinen wirtschaftlichen Betrieb ermöglicht.

Der Erfindung liegt die Aufgabe zugrunde, eine Beladevorrichtung zum Beladen einer landwirtschaftlichen Verteilmaschine mit pulver- und/oder partikelförmigem Verteilgut der eingangs genannten Art auf einfache und kostengünstige Weise dahingehend weiterzubilden, dass ihre Wirtschaftlichkeit unter zumindest weitgehender Vermeidung der vorgenannten Nachteile sowohl hinsichtlich der Anschaffung als auch hinsichtlich des Betriebs verbessert wird.

Erfindungsgemäß wird diese Aufgabe bei einer Beladevorrichtung der eingangs genannten Art dadurch gelöst, dass die Fördereinrichtung mit der ihr zugeordneten Steuereinrichtung von einer separaten Fördereinheit gebildet ist, welche an dem Vorratsbehälter stromab eines Auslasses desselben lösbar montierbar ist.

Die erfindungsgemäße Ausgestaltung sieht folglich einen modularen Aufbau der Beladevorrichtung vor, wobei die separate Fördereinheit mit der Fördereinrichtung und der ihr zugeordneten Steuereinrichtung an dem mobilen Vorratsbehälter stromab von dessen Auslass desselben lösbar montiert ist. Auf diese Weise lässt sich die Fördereinheit bedarfsweise für verschiedene mobile Vorratsbehälter - z.B. für solche mit unterschiedlichem Fassungsvermögen, je nach dem, welche Gesamtmenge an Verteilgut von der jeweiligen landwirtschaftlichen Verteilmaschine an deren Einsatzort gerade benötigt wird - verwenden, wobei der mobile Vorratsbehälter weitestgehend nach herkömmlicher Bauart ausgestaltet sein kann und lediglich einer entsprechenden Halterung zur lösbaren Montage der Fördereinrichtung der Fördereinheit bedarf, so dass herkömmliche mobile Vorratsbehälter insoweit auch einfach nachgerüstet werden können. Die separate Fördereinheit aus Fördereinrichtung und Steuereinrichtung ermöglicht folglich einen autarken Betrieb der Fördereinheit auch in Verbindung mit verschiedenen Vorratsbehältern.

Die Fördereinrichtung der erfindungsgemäßen Fördereinheit kann grundsätzlich beliebige, als solche bekannte und für pulver- und/oder partikelförmiges Verteilgut geeignete Fördermittel aufweisen, wobei die Fördereinrichtung der Fördereinheit beispielsweise wenigstens ein Förderband und/oder wenigstens eine Förderschnecke umfassen kann.

Soweit gewünscht, kann der mobile Vorratsbehälter mit einer Abdeckung versehen sein, um das hierin aufgenommene, oft hygroskopische Verteilgut vor äußeren Einwirkungen, wie insbesondere Feuchtigkeit, zu schützen. Der mobile Vorratsbehälter und/oder die Abdeckung desselben kann dabei verschließbare Durchgangsöffnungen zur Belüftung und/oder Feuchtigkeitsregulierung von in dem Vorratsbehälter ausgenommenem Verteilgut aufweisen.

Darüber hinaus kann der mobile Vorratsbehälter mit innenseitigen Leitelementen, wie beispielsweise nach Art von Leiblechen, ausgestattet sein, welche zur Zuleitung von in dem Vorratsbehälter aufgenommenem Verteilgut in Richtung seines Auslasses ausgebildet sind, um eine etwaige Restmenge an in dem Vorratsbehälter zurückbleibendem Verteilgut nach seiner vollständigen Entleerung möglichst gering zu halten.

Wie bereits angedeutet, kann der mobile Vorratsbehälter ferner zweckmäßigerweise von dem Chassis eines Fahrzeugs getragen sein, um ihn in einfacher Weise zu seinem Einsatzort an einer landwirtschaftlichen Nutzfläche verbringen zu können. Der mobile Vorratsbehälter kann dabei beispielsweise nach Art eines Anhängers oder eines selbstfahrenden Fahrzeugs fest mit dem Chassis verbunden oder vorzugsweise seinerseits in modularer Weise, z.B. nach Art eines Containers, lösbar auf Chassis aufgesetzt sein.

Gemäß einer vorteilhaften Ausgestaltung kann vorgesehen sein, dass der mobile Vorratsbehälter um eine, insbesondere im Wesentlichen waagrechte, Schwenkachse schwenkbar ist, um ein Nachrutschen von in dem Vorratsbehälter aufgenommenem Verteilgut in Richtung des Auslasses zu ermöglichen. Die Schwenkachse kann hierbei z.B. an dem Chassis eines Fahrzeugs angeordnet sein. Im Falle einer solchen Schwenkbarkeit des mobilen Vorratsbehälters kann letzterer vorzugsweise mittels eines motorischen Vorratsbehälter-Schwenkantriebs, wie beispielsweise in Form von elektrischen, hydraulischen, pneumatischen oder hydropneumatischen Kolben-/ Zylindereinheiten, schwenkbar sein. Der motorische Vorratsbehälter-Schwenkantrieb kommuniziert hierbei vorzugsweise mit der Steuereinrichtung der Fördereinheit, um je nach Bedarf an Verteilgut den mobilen Vorratsbehälter in automatisierter Weise verschwenken zu können und auf diese Weise eine praktisch vollständige Entleerung des Vorratsbehälter zu ermöglichen.

Gemäß einer Ausführungsform kann der Auslass des mobilen Vorratsbehälters zwecks Erzielung des erfindungsgemäßen modularen Aufbaus der Beladevorrichtung beispielsweise an einem Boden des mobilen Vorratsbehälters angeordnet sein, wobei die Fördereinrichtung der Fördereinheit in eine unterhalb des Auslasses angeordnete Aufnahme, z.B. etwa nach Art einer Schublade, einschiebbar montierbar ist. Sofern der mobile Vorratsbehälter in der vorstehend beschriebenen Weise schwenkbar ist, kann die lösbar an dem mobilen Vorratsbehälter montierte Fördereinheit auf diese Weise gemeinsam mit dem Vorratsbehälter schwenkbar sein.

Stattdessen kann zu demselben Zweck beispielsweise vorgesehen sein, dass der Auslass des mobilen Vorratsbehälters im unteren Bereich einer Seitenwand desselben angeordnet ist, wobei die Fördereinrichtung der Fördereinheit an den Auslass angrenzend, insbesondere um eine im Wesentlichen horizontale Schwenkachse, schwenkbar montierbar ist. Im Falle einer derartigen Schwenkbarkeit der Fördereinrichtung der Fördereinheit kann die Fördereinrichtung vorteilhafterweise mittels eines motorischen Fördereinrichtung-Schwenkantriebs, wie z.B. wiederum in Form von elektrischen, hydraulischen, pneumatischen oder hydropneumatischen Kolben-/Zylindereinheiten, schwenkbar sein. Der motorische Fördereinrichtung-Schwenkantrieb kommuniziert dabei vorzugsweise mit der Steuereinrichtung der Fördereinheit, um je nach notwendiger Höhe des freien Endes der Fördereinrichtung, welche den vorgesehenen Beladeort der landwirtschaftlichen Verteilmaschine vorgibt, die Fördereinrichtung in die gewünschte Beladeposition in automatisierter Weise zu verschwenken.

Die Steuereinrichtung der Fördereinheit kann zweckmäßigerweise ein Eingabe- und/oder Anzeigemodul aufweisen, welches z.B. eine Tastatur, einen Bildschirm, einen Touchscreen oder dergleichen umfassen kann. Das Eingabe- und/oder Anzeigemodul kann insbesondere zum Anzeigen von Parametern und/oder Befehlen und/oder zum Eingeben von Parametern und/oder Befehlen ausgebildet sein, wobei die Parameter und Befehle verschiedene Aspekte der, insbesondere automatischen, Beladung der landwirtschaftlichen Verteilmaschine betreffen. Lediglich beispielhaft seien für Parameter, welche eingegeben und/oder angezeigt werden können, die in dem mobilen Vorratsbehälter befindliche und/oder diesem bereits entnommene Menge an Verteilgut, z.B. anhand des aktuellen Gewichts des Vorratsbehälters, Start- und Stoppzeiten der Fördereinrichtung, die Dauer und/oder Anzahl an bereits erfolgten und/oder noch geplanten Befüllvorgängen der landwirtschaftlichen Verteilmaschine, Einstellungen des mobilen Vorratsbehälters und/oder der Fördereinrichtung, wie z.B. deren geografischen Positionsdaten, die Ausrichtung bzw. die Schwenkposition von Vorratsbehälter und/oder Fördereinrichtung, etwaige Betriebsstörungen, etc. Bei den eingebbaren und/oder angezeigten Befehlen kann es sich beispielsweise um Eingaben zur gewünschten Ausrichtung der Fördereinrichtung und/oder des mobilen Vorratsbehälters, zur Aktivierung und Deaktivierung der Fördereinrichtung einschließlich deren Programmierung für einen automatisierten Betrieb, etc. handeln.

Die Steuereinrichtung der Fördereinheit kann ferner vorzugsweise eine erste, insbesondere drahtlose, Schnittstelle aufweisen, welche zur Kommunikation mit einem programmtechnisch eingerichteten mobilen Endgerät ausgebildet ist, bei welchem es sich beispielsweise um ein Smartphone, um einen Tablet-Computer, um ein Laptop oder dergleichen handeln kann. Die Steuereinrichtung kann in diesem Zusammenhang zweckmäßigerweise
- zum Anzeigen von Parametern und/oder Befehlen, wie z.B. solchen der oben genannten Art, auf dem programmtechnisch eingerichteten mobilen Endgerät ausgebildet sein, so dass letzteres als Anzeigeeinrichtung der Steuereinrichtung zu dienen vermag, und/oder
- zum Empfangen von in das programmtechnisch eingerichtete mobile Endgerät eingegebenen Parametern, wie z.B. solchen der oben genannten Art, ausgebildet sein, so dass das mobile Endgerät als Eingabeeinrichtung der Steuereinrichtung zu dienen vermag, und/oder
- zum Empfangen und Ausführen von in das programmtechnisch eingerichtete mobile Endgerät eingegebenen Befehlen, wie z.B. solchen der oben genannten Art, ausgebildet sein, so dass die Fördereinheit direkt mittels des mit ihrer Steuereinrichtung kommunizierenden mobilen Endgerätes fernbedient werden kann.

Die Steuereinrichtung der Fördereinheit kann alternativ oder vorzugsweise zusätzlich zu der ersten Schnittstelle eine zweite, insbesondere drahtlose, Schnittstelle aufweisen, welche zur Kommunikation mit einer Steuer- und/oder Regeleinrichtung einer landwirtschaftlichen Verteilmaschine ausgebildet ist, wie beispielsweise über das in der Landtechnik bekannte ISOBUS-Standardprotokoll, bei welchem es sich um ein einheitliches Datenübertragungsprotokoll gemäß der ISO Norm 11783 handelt, welche für den Einsatz in verschiedenen landwirtschaftlichen Maschinen unterschiedlicher Hersteller dient. Die Steuereinrichtung kann in diesem Zusammenhang in ähnlicher Weise
- zum Empfangen von seitens der Steuer- und/oder Regeleinrichtung der landwirtschaftlichen Verteilmaschine gesendeten Parametern, wie beispielsweise solchen der weiter oben beschriebenen Art, und/oder
- zum Empfangen und Ausführen von seitens der Steuer- und/oder Regeleinrichtung der landwirtschaftlichen Verteilmaschine gesendeten Befehlen, wie beispielsweise solchen der weiter oben beschriebenen Art,
ausgebildet sein, wobei die Parameter und/oder Befehle entweder seitens des Bedieners der landwirtschaftlichen Verteilmaschine in deren Steuer- und/oder Regeleinrichtung eingegeben werden können, oder wobei die Parameter und/oder Befehle im Falle einer zumindest teil- oder gänzlich autonom arbeitenden landwirtschaftlichen Verteilmaschine von deren Steuer- und/oder Regeleinrichtung auch automatisch generiert und an die Steuereinheit der Fördereinheit übertragen werden können, wenn beispielsweise der Behälter der landwirtschaftliche Verteilmaschine, welche an dem Beladeort positioniert worden ist, mit frischem Verteilgut befüllt werden soll. Darüber hinaus können auf diese Weise insbesondere auch für die jeweilige landwirtschaftliche Verteilmaschine spezifische Parameter an die Steuereinrichtung der Fördereinheit übertragen werden, wie beispielsweise der Verteilmaschinentyp einschließlich des Fassungsvermögens und/oder des aktuellen Füllstandes ihres Behälters, der Öffnungs- bzw. Schließposition einer Abdeckung des Behälters der landwirtschaftlichen Verteilmaschine, sofern letztere über einen Behälter mit verschließbarer Abdeckung verfügt, ihrer geometrischen Abmessungen (um z.B. das freie Ende der Fördereinrichtung auf ein entsprechendes Höhenniveau anzuheben) und dergleichen, wobei selbstverständlich auch in die Eingabeeinrichtung der Steuereinrichtung der Beladevorrichtung eingebbare oder hiervon automatisch generierte Parameter und Steuerbefehle an die landwirtschaftliche Maschine übermittelt werden können, wie beispielsweise in Bezug auf ein automatisches Öffnen einer Abdeckung des Behälters der Verteilmaschine, wenn dieser mittels der Beladevorrichtung mit Verteilgut beladen werden soll.

Zum Zwecke eines vollautomatisierten Betriebs der erfindungsgemäßen Beladevorrichtung kann beispielsweise auch vorgesehen sein, dass die Steuereinrichtung der Fördereinheit mit wenigstens einem Sensor in Verbindung steht, welcher zur Erkennung einer an dem Beladeort positionierten landwirtschaftlichen Verteilmaschine ausgebildet ist. Auf diese Weise ist die Steuereinrichtung der Steuereinheit in der Lage, eine an dem Beladeort positionierte landwirtschaftliche Verteilmaschine zu erkennen und nur in diesem Fall die Fördereinrichtung in Betrieb zu setzen, während diese andernfalls z.B. stillgesetzt bleibt und auch durch Eingriff eines Bedieners, indem dieser einen entsprechenden Steuerbefehl eingibt, nicht oder nur unter Generierung eines Warnhinweises aktivierbar ist.

Die Steuereinrichtung der Fördereinheit kann aus entsprechenden Gründen ferner mit wenigstens einem Sensor in Verbindung stehen, welcher zur Erkennung des Füllstandes an Verteilgut einer an dem Beladeort positionierten landwirtschaftlichen Verteilmaschine ausgebildet ist. Hierdurch wird die Steuereinrichtung der Steuereinheit in die Lage versetzt, den Füllstand des Behälters einer an dem Beladeort positionierten landwirtschaftliche Verteilmaschine zu erkennen und die Fördereinrichtung nur so lange in Betrieb zu setzen, bis ein vorherbestimmter maximaler Füllstand des Behälters der landwirtschaftlichen Verteilmaschine erreicht worden ist, während die Fördereinrichtung bei Erreichen oder Überschreiten eines solchen maximalen Füllstandes z.B. stillgesetzt bleibt und auch durch Eingriff eines Bedieners, indem dieser einen entsprechenden Steuerbefehl eingibt, nicht oder nur unter Generierung eines Warnhinweises aktivierbar ist.

Demgemäß kann vorzugsweise vorgesehen sein, dass die Steuereinrichtung zum Blockieren der Fördereinrichtung der Fördereinheit ausgebildet ist, wenn an dem Beladeort keine landwirtschaftliche Verteilmaschine positioniert ist und/oder wenn der Füllstand einer an dem Beladeort positionierten landwirtschaftlichen Verteilmaschine einen vorgegebenen Maximalwert übertrifft, um Fehlfunktionen der erfindungsgemäßen Beladevorrichtung - seien sie sensorgestützt automatisch oder seien sie durch manuelle Steuerbefehle ausgelöst - so weit wie möglich zu verhindern.

Gemäß einer Weiterbildung der erfindungsgemäßen Beladevorrichtung kann vorgesehen sein, dass die Fördereinheit ferner einen der Fördereinrichtung nachgeordneten Zwischenbehälter umfasst, in welchen die Fördereinrichtung das aus dem mobilen Vorratsbehälter heraus geförderte Verteilgut zu überführen vermag. Ein solcher Zwischenbehälter vermag insbesondere als "Pufferspeicher" zu dienen, um die Beladevorgänge der landwirtschaftlichen Verteilmaschine in zeitlicher Hinsicht zu verkürzen, wobei es der Zwischenbehälter ermöglicht, dass die jeweils gewünschte Menge an Verteilgut mittels der Fördereinrichtung der Fördereinheit dem mobilen Vorratsbehälter entnommen und dem Zwischenbehälter aufgegeben wird, so lange noch Verteilgut mittels der landwirtschaftlichen Verteilmaschine auf einer landwirtschaftlichen Nutzfläche ausgebracht wird. Es findet folglich eine Vordosierung an Verteilgut aus dem "großen" Vorratsbehälter in den demgegenüber "kleinen" Zwischenbehälter statt, so dass der eigentliche Beladevorgang der landwirtschaftlichen Verteilmaschine nur noch einer Überführung des in dem Zwischenbehälter vordosierten Verteilgutes in den Behälter der landwirtschaftlichen Verteilmaschine an dem Beladeort bedarf.

Der Zwischenbehälter der Fördereinheit ist folglich zweckmäßigerweise zur Überführung des hierin aufgenommenen Verteilgutes an eine an dem Beladeort positionierte landwirtschaftliche Verteilmaschine ausgebildet, wobei der Zwischenbehälter beispielsweise wenigstens ein Dosiermittel aufweisen kann, welches mittels der Steuereinrichtung der Fördereinheit aktivierbar und deaktivierbar ist, sei es durch manuelle Eingabe entsprechender Steuerbefehle in die Steuereinrichtung, eines hiermit kommunizierenden mobilen Endgerätes oder eine hiermit kommunizierenden Steuer- und/oder Regeleinrichtung einer landwirtschaftlichen Verteilmaschine, oder sei es in automatisierter Weise mithilfe von Sensoren, welche eine an dem Beladeort abgestellte Verteilmaschine und/oder den Füllstand deren Behälters zu erkennen vermögen. Bei dem Dosiermittel des Zwischenbehälters kann es sich vorzugsweise um eine Dosieröffnung handeln, welche mittels der Steuereinrichtung, z.B. durch Ansteuerung eines mit der Dosieröffnung zusammenwirkenden Dosierschiebers, auf- und zusteuerbar ist. Darüber hinaus kommen grundsätzlich auch beliebige andere, als solche bekannte Dosiermittel für den Zwischenbehälter in Betracht einschließlich Förderbändern oder -schnecken, welche mittels der Steuereinrichtung antreibbar und stillsetzbar sind.

In vorteilhafter Ausgestaltung der erfindungsgemäßen Beladevorrichtung kann vorgesehen sein, dass dem mobilen Vorratsbehälter und/oder der Fördereinheit wenigstens ein Sensor zugeordnet ist, welcher zur Erfassung der in dem Vorratsbehälter befindlichen Menge an Verteilgut und/oder der mittels der Fördereinrichtung dem Vorratsbehälter entnommenen Menge an Verteilgut ausgebildet ist. Bei dem Sensor kann es sich beispielsweise um einen Wiegesensor, aber auch um beliebige andere Sensoren, z.B. in Form von Kameras oder dergleichen, handeln.

Sofern die Beladevorrichtung mit einem Zwischenbehälter der vorgenannten Art ausgestattet ist, kann in ähnlicher Weise auch dem Zwischenbehälter wenigstens ein Sensor, wie z.B. in Form eines Wiegesensors, zugeordnet sein, welcher zur Erfassung der in dem Zwischenbehälter befindlichen Menge an Verteilgut und/oder der dem Zwischenbehälter entnommenen Menge an Verteilgut ausgebildet ist.

Hinsichtlich der Energieversorgung der erfindungsgemäßen Beladevorrichtung kann beispielsweise vorgesehen sein, dass sie einen Stromspeicher aufweist, welcher insbesondere an dem mobilen Vorratsbehälter bzw. an einem diesen tragenden Chassis angeordnet ist und an welchen die Fördereinheit und gegebenenfalls der Zwischenbehälter anschließbar ist. Der Stromspeicher kann z.B. ferner über entsprechende elektrische Schnittstellen an die Bordelektrik einer landwirtschaftlichen Verteilmaschine oder eines Fahrzeugs, wie eines Lkw als Zugfahrzeug eine achsgestützten mobilen Vorratsbehälters, anschließbar sein, um ihren Stromspeicher erforderlichenfalls am Einsatzort aufladen zu können. Die Beladevorrichtung kann überdies wenigstens ein Fotovoltaikmodul aufweisen, welches an den Stromspeicher angeschlossen ist, um den Stromspeicher der Beladevorrichtung an ihrem Einsatzort aufladen zu können.

Ferner kann vorgesehen sein, dass die Beladevorrichtung ein, z.B. satellitengestütztes, Positionsbestimmungssystem aufweist, insbesondere in Form von GPS, welches zweckmäßigerweise mit der Steuereinrichtung in Verbindung steht, welche z.B. wiederum die Positionsdaten des jeweiligen Beladeortes an die landwirtschaftliche Verteilmaschine übertragen kann, damit diese im Falle eines teilautonomen oder auch gänzlich autonomen Betriebs in der Lage ist, sich auch dann automatisch an den Beladeort zu bewegen, wenn die Beladevorrichtung an einem beliebigen Ort nahe einer landwirtschaftlichen Nutzfläche abgestellt wird.

Weitere Merkmale und Vorteile der Erfindung ergeben sich aus der nachfolgenden Beschreibung von Ausführungsbeispielen unter Bezugnahme auf die Zeichnungen. Dabei zeigen:
- Fig. 1: eine schematische perspektivische Ansicht einer Ausführungsform einer erfindungsgemäßen Beladevorrichtung während des Beladens einer landwirtschaftlichen Verteilmaschine in Form eines Schleuderdüngerstreuers;
- Fig. 2: eine schematische perspektivische Ansicht der Beladevorrichtung gemäß Fig. 1 während des Beladens einer landwirtschaftlichen Verteilmaschine in Form eines nur stark schematisiert dargestellten Streuroboters; und
- Fig. 3: eine schematische perspektivische Ansicht einer weiteren Ausführungsform einer erfindungsgemäßen Beladevorrichtung während des Beladens einer landwirtschaftlichen Verteilmaschine in Form eines nur stark schematisiert dargestellten Streuroboters.

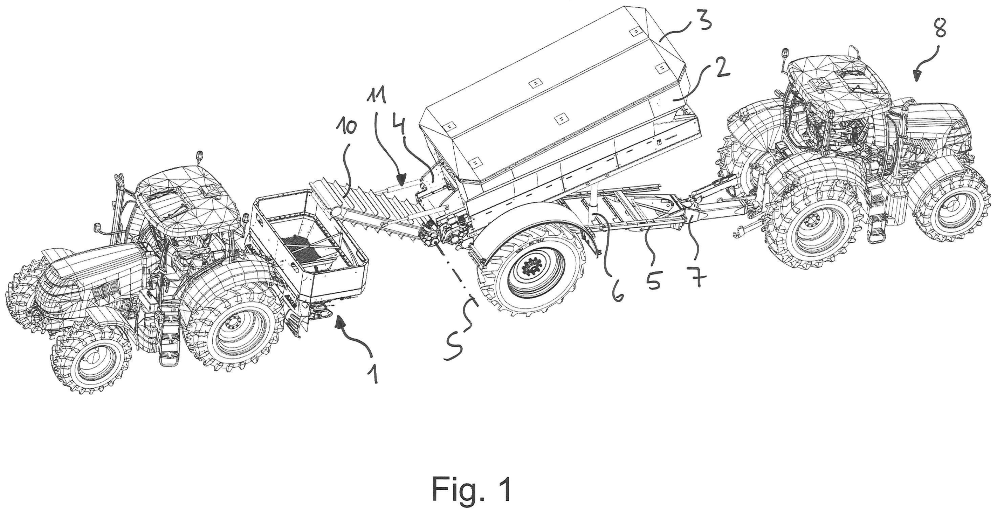

Die in der Fig. 1 schematisch wiedergegebene Beladevorrichtung zum Beladen von landwirtschaftlichen Verteilmaschinen 1, wie im vorliegenden Fall in Form eines als solchen bekannten Schleuder- oder Zentrifugaldüngerstreuers, welcher als Anbaugerät von dem Dreipunkt-Kraftheber eines Traktors aufgenommen ist, mit pulver- und/oder partikelförmigem Verteilgut, wie z.B. Dünger oder Saatgut, umfasst einen mobilen Vorratsbehälter 2 zur Aufnahme des Verteilgutes mit einem im unteren Bereich einer seiner Seiten, wie z.B. seines Hecks, angeordneten Auslass 4. Der mobile Vorratsbehälter 2 ist bei dem gezeigten Ausführungsbeispiel mit einer Abdeckung 3 versehen ist, wobei er selbst und/oder die Abdeckung 3 verschließbare Durchgangsöffnungen zur Belüftung und/oder Feuchtigkeitsregulierung des in dem mobilen Vorratsbehälter 2 ausgenommenem Verteilgutes besitzen kann (nicht zeichnerisch wiedergegeben). Darüber hinaus kann der mobile Vorratsbehälter 2 mit innenseitigen Leitelementen ausgestattet sein (ebenfalls zeichnerisch nicht erkennbar), welche zur Zuleitung des in dem Vorratsbehälter 2 aufgenommenem Verteilgutes in Richtung seines Auslasses 4 ausgebildet sind. Der mobile Vorratsbehälter 2 ist im vorliegenden Fall von dem Chassis 5 eines Fahrzeugs in Form eines achsgestützten Anhängers getragen, wobei der Anhänger mit einer Kupplung 7 ausgestattet ist, um ihn mittels eines Zugfahrzeugs 8, z.B. in Form eines Traktors, an seinen Einsatzort an einer landwirtschaftlichen Nutzfläche überführen zu können. Darüber hinaus ist der mobile Vorratsbehälter 2 um eine etwa waagrechte und sich quer zur Fahrtrichtung des den Vorratsbehälter 2 tragenden Anhängers erstreckenden, im Heckbereich des Chassis' 5 befindlichen Schwenkachse schwenkbar, um ein Nachrutschen von in dem Vorratsbehälter aufgenommenem Verteilgut in Richtung des Auslasses 4 zu ermöglichen. Um für die Möglichkeit einer praktisch vollständigen Entleerung des mobilen Vorratsbehälters 2 zu sorgen, ist letzterer ferner mittels eines motorischen Vorratsbehälter-Schwenkantriebs 6, welcher z.B. ein Kolben-/Zylindereinheit umfasst, schwenkbar.

Die Beladevorrichtung umfasst ferner eine dem mobilen Vorratsbehälter 2 zugeordnete Fördereinrichtung 10, welche im vorliegenden Fall in Form eines Förderbandes ausgestaltet ist und zur Förderung des in dem mobilen Vorratsbehälter 2 aufgenommenem Verteilgutes aus dem Vorratsbehälter 2 an einen Beladeort ausgebildet ist, welcher von dem freien Ende der Fördereinrichtung 10 vorgegeben ist. Der Fördereinrichtung 10 ist eine nicht zeichnerisch dargestellte, in geeigneter Weise programmtechnisch eingerichtete Steuereinrichtung zugeordnet, welche zur fernbedienbaren und/oder automatisierten Steuerung der Fördereinrichtung 10 ausgebildet ist. Dabei bilden die Fördereinrichtung 10 mit der ihr zugeordneten Steuereinrichtung eine separate Fördereinheit, welche an dem mobilen Vorratsbehälter 1 stromab seines Auslasses 4 lösbar montiert ist. Im Falle der Fig. 1 ist in diesem Zusammenhang vorgesehen, dass die Fördereinrichtung 10 der Fördereinheit an den Auslass 4 des mobilen Vorratsbehälter 2 angrenzend um eine etwa horizontale und sich quer zur Fahrtrichtung des den Vorratsbehälter 2 tragenden Anhängers angeordnete Schwenkachse S schwenkbar montierbar ist, so dass ihr freies Ende entsprechend der Größe der zu beladenden landwirtschaftlichen Verteilmaschine 1 höhenverstellbar ist, um den gewünschten Beladeort vorzugeben. Zum Verschwenken der Fördereinrichtung 10 um die Schwenkachse S ist ein motorischer Fördereinrichtung-Schwenkantrieb 11 vorgesehen, welcher z.B. ein Paar Kolben-/Zylindereinheiten umfasst, welche je einerseits am Rahmen des Förderbandes der Fördereinrichtung 10 angelenkt sind und andererseits an je einem Schwenkzapfen im Bereich des Auslasses 4 des mobilen Vorratsbehälters 2 lösbar montierbar sind.

Die Steuereinrichtung der Fördereinheit kann ein Eingabe- und/oder Anzeigemodul (nicht gezeigt), eine erste, insbesondere drahtlose, Schnittstelle (ebenfalls nicht gezeigt) zur Kommunikation mit einem programmtechnisch eingerichteten mobilen Endgerät und/oder eine zweite, drahtlose Schnittstelle (ebenfalls nicht gezeigt) zur Kommunikation mit einer Steuer- und/oder Regeleinrichtung der zu beladenden landwirtschaftlichen Verteilmaschine 1 aufweisen, um in der weiter oben genannten Weise verschiedene Parameter und Befehle eingeben, anzeigen und abarbeiten und die Fördereinrichtung der Fördereinheit somit in fernbedienbarer und/oder teil- oder vollautomatisierter Weise steuern zu können. Zum Zwecke eines weitestgehend autonomen Betriebs der Fördereinrichtung 10 der Fördereinheit kann deren Steuereinrichtung ferner mit Sensoren (nicht zeichnerisch wiedergegeben) in Verbindung stehen, welche beispielsweise zur Erkennung der an dem Beladeort positionierten landwirtschaftlichen Verteilmaschine 1 und/oder zur Erkennung des Füllstandes an Verteilgut in deren Behälter ausgebildet sind.

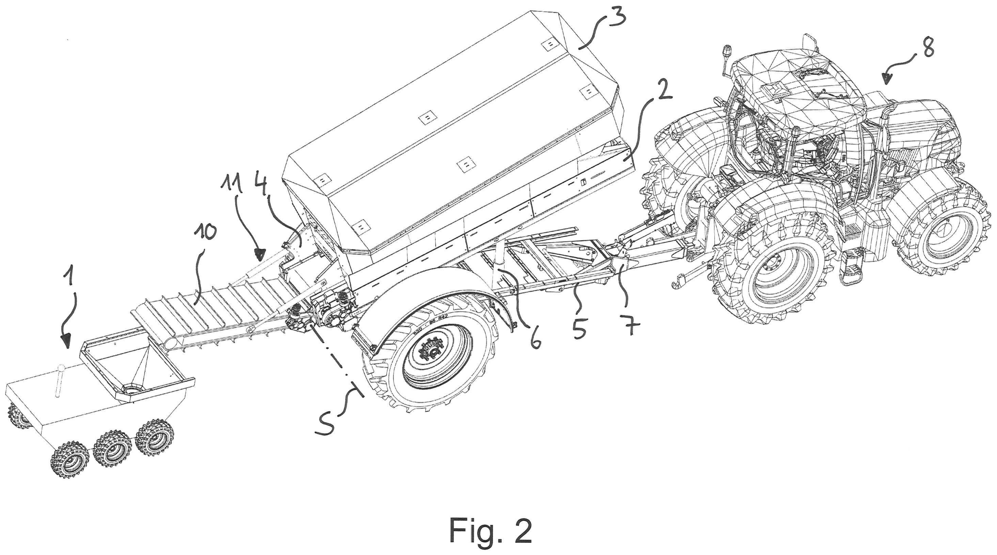

Die Fig. 2 zeigt eine der Fig. 1 entsprechende Beladevorrichtung in der Situation der automatisierten Beladung einer landwirtschaftlichen Verteilmaschine 1 in Form eines autonomen Streuroboters, von welchem lediglich sein Behälter, Rahmen und Fahrwerk zeichnerisch dargestellt sind, wohingegen alle übrigen Funktionsteile, wie insbesondere Dosier- und Verteilorgane, weggelassen worden sind.

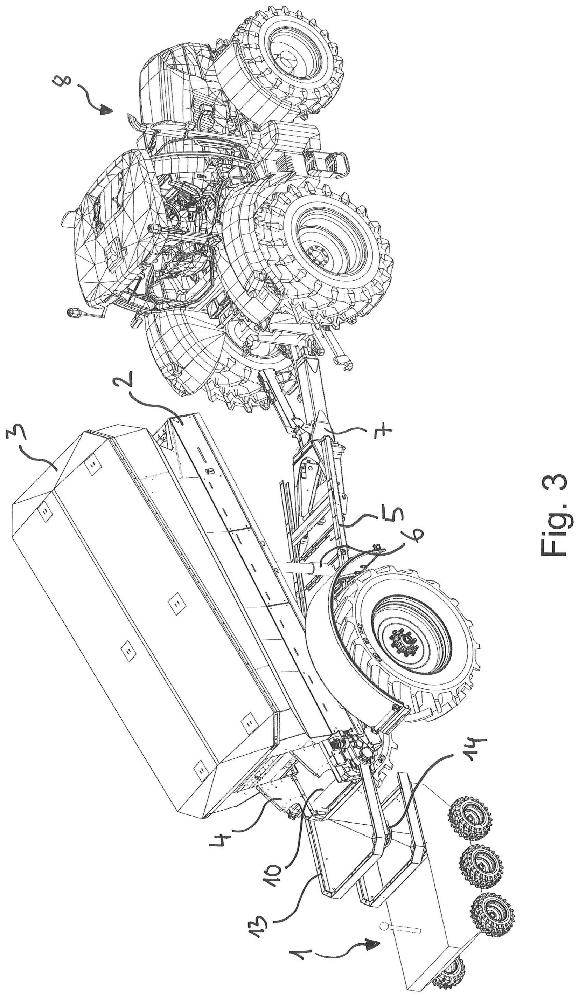

Die in der Fig. 3 schematisch wiedergegebene Ausführungsform einer Beladevorrichtung, bei welcher dieselben sowie funktionsgleiche Komponenten mit denselben Bezugszeichen versehen sind und keiner nochmaligen Erläuterung bedürfen, unterscheidet sich von jener der Fig. 1 und 2 einerseits dadurch, dass der Auslass 4 des mobilen Vorratsbehälters 1 an einem Boden desselben angeordnet und die Fördereinrichtung 10 der Fördereinheit in eine unterhalb des Auslasses 4 angeordnete Aufnahme eingeschoben, lösbar montiert ist. Andererseits umfasst die Fördereinheit im Falle der Fig. 3 einen der Fördereinrichtung 10 nachgeordneten Zwischenbehälter 13, in welchen die Fördereinrichtung 10 das aus dem mobilen Vorratsbehälter 2 heraus geförderte Verteilgut überführt. Der Zwischenbehälter 13 der Fördereinheit, dient als Pufferspeicher des mittels der Fördereinrichtung 10 dosierten Verteilgutes sowie zur Überführung des hierin aufgenommenen Verteilgutes an die an dem Beladeort positionierte landwirtschaftliche Verteilmaschine 1, welche z.B. in entsprechender Weise wie im Falle der Fig. 2 von einem nur stark schematisiert dargestellten, autonomen Streuroboter gebildet ist. Zu diesem Zweck weist der Zwischenbehälter 13 ein Dosiermittel 14 auf, welches gleichfalls mittels der Steuereinrichtung der Fördereinheit aktivierbar und deaktivierbar ist und beispielsweise in Form einer Dosieröffnung ausgestaltet sein kann, welche mittels eines durch die Steuereinrichtung angesteuerten und mit der Dosieröffnung 14 zusammenwirkenden Dosierschiebers (in der Fig. 3 nicht erkennbar) auf- und zusteuerbar ist.

Bei allen in den Fig. 1 bis 3 in schematisierter Form gezeigten Beladevorrichtungen kann ferner dem mobilen Vorratsbehälter 2 und/oder der Fördereinheit wenigstens ein Sensor (nicht dargestellt), insbesondere in Form eines Wiegesensors, zugeordnet sein, welcher zur Erfassung der in dem Vorratsbehälter 2 befindlichen Menge an Verteilgut und/oder der mittels der Fördereinrichtung 10 dem Vorratsbehälter 2 entnommenen Menge an Verteilgut ausgebildet ist. Entsprechendes gilt in Bezug auf den Zwischenbehälter 13 gemäß der Fig. 3, welchem seinerseits wenigstens ein Sensor (ebenfalls nicht dargestellt), insbesondere in Form eines Wiegesensors, zugeordnet sein kann, welcher zur Erfassung der in dem Zwischenbehälter 13 befindlichen Menge an Verteilgut und/oder der dem Zwischenbehälter 13 entnommenen Menge an Verteilgut ausgebildet ist.

Darüber hinaus kann die Beladevorrichtung bei allen Ausführungsformen gemäß den Fig. 1 bis 3 mit einem Stromspeicher (nicht zeichnerisch wiedergegeben) ausgestattet sein, welcher insbesondere an dem Vorratsbehälter 2 oder an dessen Chassis 5 angeordnet und an welchen die Fördereinheit und gegebenenfalls der Zwischenbehälter 13 anschließbar sein kann. Ein solcher Stromspeicher kann an ein z.B. ebenfalls an dem Vorratsbehälter 2 angeordnetes Fotovoltaikmodul (ebenfalls nicht zeichnerisch wiedergegeben) angeschlossen sein, um für eine zumindest teilweise autarke Energieversorgung der Beladevorrichtung zu sorgen. Darüber hinaus kann die Beladevorrichtung mit einem satellitengestützten Positionsbestimmungssystem, wie z.B. GPS, versehen sein, welches mit der Steuereinrichtung in Verbindung steht.

## Patentansprüche

1. Beladevorrichtung zum Beladen einer landwirtschaftlichen Verteilmaschine (1) mit pulver- und/oder partikelförmgem Verteilgut, umfassend:
- wenigstens einen mobilen Vorratsbehälter (2) zur Aufnahme des Verteilgutes,
- wenigstens eine dem mobilen Vorratsbehälter (2) zugeordnete Fördereinrichtung (10), welche zur Förderung von in dem mobilen Vorratsbehälter (2) aufgenommenem Verteilgut aus dem Vorratsbehälter (2) an einen Beladeort ausgebildet ist, und
- eine der Fördereinrichtung (10) zugeordnete Steuereinrichtung, welche zur fernbedienbaren und/oder automatisierten Steuerung der Fördereinrichtung (10) ausgebildet ist,
**dadurch gekennzeichnet, dass** die Fördereinrichtung (10) mit der ihr zugeordneten Steuereinrichtung von einer separaten Fördereinheit gebildet ist, welche an dem mobilen Vorratsbehälter (2) stromab eines Auslasses (4) desselben lösbar montierbar ist.

2. Beladeeinrichtung nach Anspruch 1, **dadurch gekennzeichnet, dass** die Fördereinrichtung (10) der Fördereinheit ein Förderband und/oder eine Förderschnecke umfasst.

3. Beladevorrichtung nach Anspruch 1 oder 2, **dadurch gekennzeichnet, dass** der mobile Vorratsbehälter (2)
- mit einer Abdeckung (3) versehen ist, wobei der mobile Vorratsbehälter (2) und/oder die Abdeckung (3) desselben insbesondere verschließbare Durchgangsöffnungen zur Belüftung und/oder Feuchtigkeitsregulierung von in dem Vorratsbehälter (2) ausgenommenem Verteilgut aufweist, und/oder
- mit innenseitigen Leitelementen ausgestattet ist, welche zur Zuleitung von in dem Vorratsbehälter (2) aufgenommenem Verteilgut in Richtung seines Auslasses (4) ausgebildet sind, und/oder
- von dem Chassis (5) eines Fahrzeugs getragen ist, wobei der mobile Vorratsbehälter (2) insbesondere lösbar auf das Chassis (5) aufgesetzt ist.

4. Beladevorrichtung nach einem der Ansprüche 1 bis 3, **dadurch gekennzeichnet, dass** der mobile Vorratsbehälter (2) um eine Schwenkachse schwenkbar ist, um ein Nachrutschen von in dem Vorratsbehälter (2) aufgenommenem Verteilgut in Richtung des Auslasses (4) zu ermöglichen, wobei der mobile Vorratsbehälter (2) insbesondere mittels eines motorischen Vorratsbehälter-Schwenkantriebs (6) schwenkbar ist, welcher vorzugsweise mit der Steuereinrichtung der Fördereinheit kommuniziert.

5. Beladevorrichtung nach einem der Ansprüche 1 bis 4, **dadurch gekennzeichnet, dass** der Auslass (4) des mobilen Vorratsbehälters (2)
- an einem Boden des Vorratsbehälters (2) angeordnet ist, wobei die Fördereinrichtung (10) der Fördereinheit in eine unterhalb des Auslasses (4) angeordnete Aufnahme einschiebbar montierbar ist, oder
- im unteren Bereich einer Seitenwand des Vorratsbehälters (2) angeordnet ist, wobei die Fördereinrichtung (10) der Fördereinheit an den Auslass (4) angrenzend schwenkbar montierbar ist, wobei die Fördereinrichtung (10) der Fördereinheit insbesondere mittels eines motorischen Fördereinrichtung-Schwenkantriebs (11) schwenkbar ist, welcher vorzugsweise mit der Steuereinrichtung der Fördereinheit kommuniziert.

6. Beladevorrichtung nach einem der Ansprüche 1 bis 5, **dadurch gekennzeichnet, dass** die Steuereinrichtung der Fördereinheit ein Eingabe- und/oder Anzeigemodul aufweist, wobei das Eingabe- und/oder Anzeigemodul insbesondere
- zum Anzeigen von Parametern und/oder Befehlen ausgebildet ist, und/oder
- zum Eingeben von Parametern und/oder Befehlen ausgebildet ist.

7. Beladevorrichtung nach einem der Ansprüche 1 bis 6, **dadurch gekennzeichnet, dass** die Steuereinrichtung eine erste, insbesondere drahtlose, Schnittstelle aufweist, welche zur Kommunikation mit einem programmtechnisch eingerichteten mobilen Endgerät ausgebildet ist, wobei die Steuereinrichtung insbesondere
- zum Anzeigen von Parametern und/oder Befehlen auf dem programmtechnisch eingerichteten mobilen Endgerät ausgebildet ist, und/oder
- zum Empfangen von in das programmtechnisch eingerichtete mobile Endgerät eingegebenen Parametern ausgebildet ist, und/oder
- zum Empfangen und Ausführen von in das programmtechnisch eingerichtete mobile Endgerät eingegebenen Befehlen ausgebildet ist.

8. Beladevorrichtung nach einem der Ansprüche 1 bis 7, **dadurch gekennzeichnet, dass** die Steuereinrichtung der Fördereinheit eine zweite, insbesondere drahtlose, Schnittstelle aufweist, welche zur Kommunikation mit einer Steuer- und/oder Regeleinrichtung einer landwirtschaftlichen Verteilmaschine ausgebildet ist, wobei die Steuereinrichtung insbesondere
- zum Empfangen von seitens der Steuer- und/oder Regeleinrichtung der landwirtschaftlichen Verteilmaschine (1) gesendeten Parametern ausgebildet ist, und/oder
- zum Empfangen und Ausführen von seitens der Steuer- und/oder Regeleinrichtung der landwirtschaftlichen Verteilmaschine (1) gesendeten Befehlen ausgebildet ist.

9. Beladevorrichtung nach einem der Ansprüche 1 bis 8, **dadurch gekennzeichnet, dass** die Steuereinrichtung der Fördereinheit
- mit wenigstens einem Sensor in Verbindung steht, welcher zur Erkennung einer an dem Beladeort positionierten landwirtschaftlichen Verteilmaschine (1) ausgebildet ist, und/oder
- mit wenigstens einem Sensor in Verbindung steht, welcher zur Erkennung des Füllstandes an Verteilgut einer an dem Beladeort positionierten landwirtschaftlichen Verteilmaschine (1) ausgebildet ist,
wobei die Steuereinrichtung insbesondere zum Blockieren der Fördereinrichtung (10) der Fördereinheit ausgebildet ist, wenn an dem Beladeort keine landwirtschaftliche Verteilmaschine (1) positioniert ist und/oder wenn der Füllstand einer an dem Beladeort positionierten landwirtschaftlichen Verteilmaschine (1) einen vorgegebenen Maximalwert übertrifft.

10. Beladevorrichtung nach einem der Ansprüche 1 bis 9, **dadurch gekennzeichnet, dass** die Fördereinheit ferner einen der Fördereinrichtung (10) nachgeordneten Zwischenbehälter (13) umfasst, in welchen die Fördereinrichtung (10) das aus dem Vorratsbehälter (2) heraus geförderte Verteilgut zu überführen vermag, wobei der Zwischenbehälter (13) der Fördereinheit insbesondere zur Überführung des hierin aufgenommenen Verteilgutes an eine an dem Beladeort positionierte landwirtschaftliche Verteilmaschine (1) ausgebildet ist.

11. Beladevorrichtung nach Anspruch 10, **dadurch gekennzeichnet, dass** der Zwischenbehälter (13) wenigstens ein Dosiermittel aufweist, welches mittels der Steuereinrichtung der Fördereinheit aktivierbar und deaktivierbar ist, wobei es sich bei dem Dosiermittel des Zwischenbehälters (13) insbesondere
- um eine Dosieröffnung (14) handelt, welche mittels der Steuereinrichtung auf- und zusteuerbar ist, oder
- um ein Fördermittel, wie ein Förderband oder eine Förderschnecke, handelt, welches mittels der Steuereinrichtung antreibbar und stillsetzbar ist.

12. Beladevorrichtung nach einem der Ansprüche 1 bis 11, **dadurch gekennzeichnet, dass** dem mobilen Vorratsbehälter (2) und/oder der Fördereinheit wenigstens ein Sensor, insbesondere in Form eines Wiegesensors, zugeordnet ist, welcher zur Erfassung der in dem Vorratsbehälter (2) befindlichen Menge an Verteilgut und/oder der mittels der Fördereinrichtung (10) dem Vorratsbehälter (2) entnommenen Menge an Verteilgut ausgebildet ist.

13. Beladevorrichtung nach Anspruch 10 oder 11, **dadurch gekennzeichnet, dass** dem Zwischenbehälter (13) wenigstens ein Sensor, insbesondere in Form eines Wiegesensors, zugeordnet ist, welcher zur Erfassung der in dem Zwischenbehälter (13) befindlichen Menge an Verteilgut und/oder der dem Zwischenbehälter (13) entnommenen Menge an Verteilgut ausgebildet ist.

14. Beladevorrichtung nach einem der Ansprüche 1 bis 13, **dadurch gekennzeichnet, dass** sie einen Stromspeicher aufweist, welcher insbesondere an dem mobilen Vorratsbehälter (2) angeordnet ist und an welchen die Fördereinheit sowie gegebenenfalls der Zwischenbehälter (13) anschließbar ist, wobei die Beladevorrichtung vorzugsweise wenigstens ein Fotovoltaikmodul aufweist, welches an den Stromspeicher angeschlossen ist.

15. Beladevorrichtung nach einem der Ansprüche 1 bis 14, **dadurch gekennzeichnet, dass** sie ein Positionsbestimmungssystem aufweist, welches insbesondere mit der Steuereinrichtung in Verbindung steht.
